# EUROPÄISCHE PATENTANMELDUNG

(11) **EP 4 614 455 A1**
(43) Veröffentlichungstag der Anmeldung: **10.09.2025**
(21) Anmeldenummer: 24222800.5
(22) Anmeldetag: 23.12.2024
(51) Int. Cl.: G06V 10/44, G06V 10/70, G06V 10/82, G06V 20/59

(54) **VERFAHREN ZUM ERKENNEN EINES VORGEGEBENEN GEGENSTANDES IN EINEM INNENRAUM EINES FAHRZEUGES**

(30) Priorität: 04.03.2024 DE 102024201988
(71) Anmelder: Siemens Mobility GmbH, 81739 München (DE)
(72) Erfinder: Sema, Albi, 10629 Berlin (DE); Stuffer, Michael, 83109 Großkarolinenfeld (DE)
(74) Vertreter: Siemens Patent Attorneys

(57) **Zusammenfassung**

Die Erfindung betrifft ein computerimplementiertes Verfahren zum Erkennen eines vorgegebenen Gegenstandes in einem Innenraum eines Fahrzeuges, insbesondere eines Schienenfahrzeuges, wobei ein Bild des Innenraumes mit einem trainierten Autoencoder analysiert wird, wobei der Autoencoder einen Encoder und einen Decoder aufweist, wobei das Bild des Innenraumes in Bildteile eingeteilt ist, wobei eine erste Teilmenge der Bildteile des Bildes von dem Encoder verarbeitet wird und eine versteckte Repräsentation des Bildes ermittelt wird, wobei die versteckte Repräsentation für jedes Bildteil der ersten Teilmenge ein verstecktes Bildteil aufweist, wobei anschließend zu den versteckten Bildteilen an den Positionen der maskierten und nicht analysierten Bildteile Füllbildteile eingefügt werden, wobei der Decoder anhand der versteckten Bildteile und der Füllbildteile ein dekodiertes Bild ermittelt, wobei das dekodierte Bild mit dem Bild des Innenraumes verglichen wird und abhängig von einem Ergebnis des Vergleichs der vorgegebene Gegenstand erkannt wird oder nicht, und wobei nach Erkennen des vorgegebenen Gegenstandes eine Mitteilung ausgegeben und/oder eine Mitteilung gespeichert wird.

## Beschreibung

Die Erfindung betrifft ein computerimplementiertes Verfahren zum Erkennen eines vorgegebenen Gegenstandes in einem Innenraum eines Fahrzeuges, insbesondere eines Schienenfahrzeuges, eine Vorrichtung, die ausgebildet ist, das Verfahren auszuführen, und ein Computerprogrammprodukt.

Aus dem Stand der Technik ist es bekannt, trainierte neuronale Netze zum Erkennen eines Objektes in einem Bild zu verwenden.

Die Aufgabe der Erfindung besteht darin, eine verbesserte Vorrichtung und ein verbessertes Verfahren zum Erkennen eines vorgegebenen Gegenstandes in einem Innenraum eines Fahrzeuges, insbesondere eines Schienenfahrzeuges, bereitzustellen.

Die Aufgabe der Erfindung wird durch die unabhängigen Patentansprüche gelöst. Weiterbildungen der Erfindung sind in den abhängigen Ansprüchen angegeben.

Es wird ein computerimplementiertes Verfahren zum Erkennen eines vorgegebenen Gegenstandes in einem Innenraum eines Fahrzeuges, insbesondere eines Schienenfahrzeuges vorgeschlagen, wobei ein Bild des Innenraumes mit einem trainierten Autoencoder analysiert wird, wobei der Autoencoder einen Encoder und einen Decoder aufweist, wobei das Bild des Innenraumes in Bildteile eingeteilt ist oder eingeteilt wird, wobei eine erste Teilmenge der Bildteile des Bildes von dem Encoder verarbeitet wird und eine versteckte Repräsentation des Bildes ermittelt wird, wobei die versteckte Repräsentation für jedes Bildteil der ersten Teilmenge ein verstecktes Bildteil aufweist, wobei anschließend zu den versteckten Bildteilen an den Positionen der maskierten und nicht analysierten Bildteile Füllbildteile eingefügt werden, wobei der Decoder anhand der versteckten Bildteile und der Füllbildteile ein dekodiertes Bild ermittelt, wobei das dekodierte Bild mit dem Bild des Innenraumes verglichen wird und abhängig von einem Ergebnis des Vergleichs der vorgegebene Gegenstand erkannt wird oder nicht, und wobei nach Erkennen des vorgegebenen Gegenstandes eine Mitteilung ausgegeben und/oder eine Mitteilung gespeichert wird.

Der vorgegebene Gegenstand kann beispielsweise ein Gegenstand sein, der nicht zu einer fest installierten Ausstattung des Innenraumes des Fahrzeuges gehört. Beispielsweise kann der Gegenstand eine Person, ein Tier, eine Tasche, eine Jacke, ein Regenschirm, ein Fahrrad usw. sein. Die Mitteilung kann optisch und/oder akustisch ausgegeben werden. Zudem kann die Mitteilung eine Information über die Art des Gegenstandes enthalten. Beispielsweise kann die Mitteilung auf einem Bildschirm insbesondere im Fahrzeug oder außerhalb des Fahrzeuges angezeigt werden.

Das beschriebene Verfahren kann automatisch oder auf eine Eingabe oder Anfrage durch eine Bedienperson ausgeführt werden. Das Bild des Innenraumes wird beispielsweise von einer Kamera des Fahrzeuges aufgenommen und anschließend das beschriebene Verfahren durchgeführt. Das Verfahren kann von einem Computer oder einer Recheneinheit des Schienenfahrzeuges oder von einer außerhalb des Fahrzeuges angeordneten Recheneinheit oder Computer durchgeführt werden.

Mithilfe des beschriebenen Verfahrens kann automatisch und sicher das Vorhandensein eines Gegenstandes, der nicht zu der fest installierten Ausstattung des Innenraumes des Fahrzeuges gehört, erkannt werden.

In einer Ausführung wird das Verfahren wenigstens ein weiteres Mal für eine weitere Teilmenge der Bildteile des gleichen Bildes des Innenraumes durchgeführt. Auf diese Weise wird ein weiteres dekodiertes Bild ermittelt. Die erste Teilmenge und die weitere Teilmenge der Bildteile können wenigstens teilweise verschiedene Bildteile des Bildes aufweisen. Insbesondere kann die erste Teilmenge und die zweite Teilmenge nur verschiedene Bildteile des Bildes aufweisen. Aus dem dekodierten Bild und dem weiteren dekodierten Bild wird ein gemitteltes Bild ermittelt. Das gemittelte Bild kann auf verschiedene Weisen erstellt werden. Beispielsweise können die Helligkeiten und/oder die Farbwerte der zwei dekodierten Bilder gemittelt werden. Zudem kann die Mittelung keine präzise Ermittlung eines Mittelwertes der Helligkeiten und/oder der Farbwerte der zwei dekodierten Bilder darstellen. Beispielsweise können die Helligkeiten und/oder Farbwerte der dekodierten Bilder bei der Mittelung mit verschiedenen Faktoren unterschiedlich gewichtet werden. Weiterhin kann die Mittelung für jeden Pixel oder für mehrere Pixel des Bildes erfolgen.

Das gemittelte Bild wird mit dem Bild des Innenraumes verglichen und abhängig von einem Ergebnis des Vergleichs wird der vorgegebene Gegenstand erkannt oder nicht, und wobei nach Erkennen des vorgegebenen Gegenstandes eine Mitteilung ausgegeben und/oder eine Mitteilung gespeichert wird.

Durch die Ermittlung mehrerer dekodierter Bilder und der Bildung eines gemittelten Bildes wird die Erkennung des vorgegebenen Gegenstandes im Bild verbessert.

In einer weiteren Ausführung wird das beschriebene Verfahren wenigstens dreimal durchgeführt und es werden wenigstens drei dekodierte Bilder ermittelt, wobei aus den drei dekodierten Bildern das gemittelte Bild ermittelt wird. Abhängig von der gewählten Ausführung kann das Verfahren zum Ermitteln dekodierter Bilder so oft durchgeführt werden bis mehr als 90 %, insbesondere alle Bildteile des Bildes des Innenraumes verarbeitet wurden. Insbesondere durch die Verwendung aller Bildteile des Bildes für die Ermittlung des gemittelten Bildes wird die Wahrscheinlichkeit für die Erkennung eines vorgegebenen Gegenstandes erhöht. Vorzugsweise können bei jedem Durchgang unterschiedliche Bildteile des Bildes als Teilmenge dem Encoder zugeführt werden. Somit wird jedes Bildteil des Bildes nur einmal dem Encoder zugeführt.

In einer Ausführung weist die erste und/oder die weitere Teilmenge der Bildteile zwischen 10 % und 40 % der Bildteile des Bildes des Innenraumes auf. Die erste und die wenigstens eine weitere Teilmenge kann beispielsweise nur verschiedene Bildteile des Bildes umfassen.

In einer weiteren Ausführung kann die erste und die wenigstens eine weitere Teilmenge der Bildteile jeweils die gleiche Anzahl an Bildteilen des Bildes aufweisen.

In einer weiteren Ausführung wird das gemittelte Bild durch eine Mittelung der Helligkeiten der dekodierten Bilder und/oder durch eine Mittelung der Farbwerte der dekodierten Bilder ermittelt. Beispielsweise kann durch eine pixelweise Mittelung der Helligkeiten der dekodierten Bilder und/oder durch eine pixelweise Mittelung der Farbwerte der dekodierten Bilder das gemittelte Bild ermittelt werden. Zudem kann die Mittelung keine präzise Ermittlung eines Mittelwertes der Helligkeiten und/oder der Farbwerte der zwei dekodierten Bilder darstellen. Beispielsweise können die Helligkeiten und/oder Farbwerte der dekodierten Bilder bei der Mittelung mit verschiedenen Faktoren unterschiedlich gewichtet werden. Weiterhin kann die Mittelung für jeden Pixel oder für mehrere Pixel des Bildes erfolgen.

In einer Ausführung werden bei dem Vergleich des dekodierten Bildes mit dem Bild des Innenraumes die Helligkeiten und/oder die Farbwerte des dekodierten Bildes und des Bildes des Innenraumes verglichen. Dabei kann ein pixelweiser Vergleich erfolgen. Es kann ein vorgegebener Gegenstand erkannt werden, wenn die verglichenen Helligkeiten und/oder die verglichenen Farbwerte eine vorgegebene Schwelle für insbesondere einen vorgegebenen Pixelbereich überschreiten.

In einer Ausführung wird nach Erkennen eines vorgegebenen Gegenstandes im gemittelten Bild wenigstens ein Bildbereich des gemittelten Bildes, der den vorgegebenen Gegenstand aufweist, in Bezug auf ein Vorhandensein von vorgegebenen Merkmalen analysiert, wobei die mithilfe der Analyse gefundenen vorgegebenen Merkmale des Bildbereiches in einem mehrdimensionalen Merkmalsraum gespeichert werden, wobei das gemittelte Bild einem vorgegebenen Cluster von gemittelten Bildern mit ähnlichen oder gleichen Gegenständen zugeordnet wird, und wobei eine Mitteilung über das gemittelte Bild und/oder über den zugeordneten Cluster des gemittelten Bildes ausgegeben und/oder gespeichert wird. Auf diese Weise können eine automatische Erkennung und Ausgabe oder Speicherung der Art des detektierten Gegenstandes erfolgen. Somit wird die Information, die mit dem automatischen Verfahren bereitgestellt wird, erhöht. Auf diese Weise können die weiteren Aktionen von der Art des Gegenstandes gewählt werden. Eine Person oder ein Tier im Innenraum des Fahrzeuges erfordert eine andere Reaktion oder Aufmerksamkeit als eine Tasche oder eine Jacke.

In einer Ausführung wird nach Erkennen eines vorgegebenen Gegenstandes im gemittelten Bild wenigstens ein Bildbereich des gemittelten Bildes, der den vorgegebenen Gegenstand aufweist, in Bezug auf ein Vorhandensein von vorgegebenen Merkmalen analysiert, wobei die mit der Analyse gefundenen vorgegebenen Merkmale des Bildbereiches in einem mehrdimensionalen Merkmalsraum der vorgegebenen Merkmale gespeichert werden, wobei ein neuer Cluster gebildet wird, wenn das gemittelte Bild einem vorgegebenen Cluster von gemittelten Bildern mit ähnlichen oder gleichen Gegenständen nicht zugeordnet werden kann, wobei dem neuen Cluster eine Kennung zugeordnet wird, und wobei eine Mitteilung über den neuen Cluster mit der Kennung ausgegeben und/oder gespeichert wird. Auf diese Weise wird ein selbstlernendes Verfahren ermöglicht, das automatisch neue Cluster von Gegenständen bilden kann.

In einer Ausführung wurde der Autoencoder mit einem selbstlernenden Verfahren mit Bildern von Innenräumen von Fahrzeugen trainiert, wobei die Bilder Innenräume mit und ohne vorgegebene Gegenstände zeigen. Die Bilder wurden beispielsweise von Kameras der Fahrzeuge aufgenommen und für das Training bereitgestellt.

In einer Ausführung wurde in wenigstens einem Teil der Bilder, die für das Training des Autoencoders verwendet werden, in wenigstens einem vorgegebenen Flächenbereich die Helligkeit des Bildes um wenigstens 10 % gegenüber dem aufgenommenen Bild erhöht. Auf diese Weise werden beim Training eine natürliche Sonnenstrahlung simuliert. Dadurch wird das Training des Autoencoders verbessert. In einer Ausführung ist der vorgegebene Flächenbereich als polygone Fläche mit insbesondere drei Ecken ausgebildet.

In einer Ausführung ist der Encoder in Form eines ersten Vision Transformer ausgebildet und/oder der Decoder ist in Form eines zweiten Vision Transformer ausgebildet. Der zweite Vision Transformer kann einfacher ausgebildet sein als der erste Vision Transformer. Dadurch wird Rechenzeit eingespart, wobei das Ergebnis der Detektion von vorgegebenen Gegenständen im Bild des Innenraumes weiterhin eine hohe Qualität aufweist.

Es wird eine Vorrichtung vorgeschlagen, die ausgebildet ist, das beschriebene Verfahren auszuführen.

Es wird ein Computerprogrammprodukt mit Programmcodemitteln vorgeschlagen, die bei einem Ablauf auf einer Recheneinheit ausgebildet sind, das beschriebene ein Verfahren auszuführen. Unabhängig vom grammatikalischen Geschlecht eines bestimmten Begriffes sind Personen mit männlicher, weiblicher oder anderer Geschlechteridentität mit umfasst.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
FIG 1 in einer schematischen Darstellung ein Fahrzeug mit einem Innenraum;
FIG 2 ein schematisches Bild des Innenraumes des Fahrzeuges ohne einen vorgegebenen Gegenstand;
FIG 3 eine schematische Darstellung der Vorrichtung zum Überprüfen des Zustandes des Innenraumes;
FIG 4 eine schematische Darstellung einer Vorrichtung zum Durchführen eines maskierten Trainingsverfahrens und zum Erkennen eines vorgegebenen Gegenstandes in einem Innenraum eines Fahrzeuges;
FIG 5A bis 5D verschiedene Darstellungen von Bildern;
FIG 6 ein Vergleichsbild zwischen einem dekodierten Bild des Innenraumes und dem Bild des Innenraumes;
FIG 7 einen schematischen Programmablauf zur Durchführung eines Verfahrens zum Erkennen eines Gegenstandes;
FIG 8 einen weiteren schematischen Programmablauf zur Durchführung des Verfahrens zum Erkennen eines Gegenstandes; und
FIG 9 in einer schematischen Darstellung von Clustern in einem Merkmalsraum zeigt.

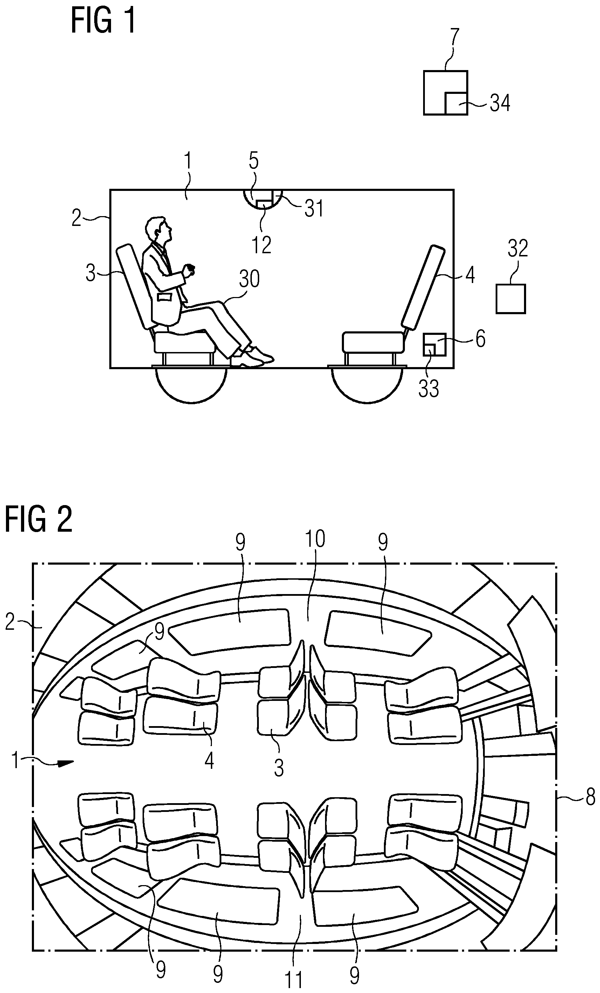

FIG 1 zeigt in einer schematischen Darstellung einen Innenraum 1 eines Fahrzeuges 2, wobei in dem Innenraum 1 Sitze 3, 4 angeordnet sind. An einer Decke des Innenraumes 1 ist eine Kamera 5 angeordnet. Die Kamera 5 ist ausgebildet, um Bilder oder Videos des Innenraumes 1 aufzunehmen. Die Kamera 5 kann auch an anderen Positionen des Innenraumes 1 angeordnet sein. In dem dargestellten Ausführungsbeispiel sitzt auf einem ersten Sitz 3 eine Person 30. Das Fahrzeug 2 kann z.B. ein Auto, ein Bus, ein Zug, eine S-Bahn usw. sein. Die Kamera 5 weist einen Datenspeicher 31 auf, in dem die Bilder oder Filme, die die Kamera 5 aufnimmt, zwischengespeichert werden können. Zudem ist die Kamera 5 mit einem Computer 6 über eine drahtlose oder drahtgebundene Datenschnittstelle 12 verbunden. Der Computer 6 kann beispielsweise in dem Fahrzeug 2 oder außerhalb des Fahrzeuges 2 angeordnet sein. Weiterhin kann die Kamera 5 über eine drahtlose Datenschnittstelle mit einem externen Computer 7 in Verbindung stehen. Der externe Computer 7 kann ortsfest in einem Gebäude oder in einem Gehäuse, zum Beispiel neben einer Straße, oder neben Schienen eines Gleises angeordnet sein. Die Datenschnittstelle kann über eine WLAN-Verbindung, eine Mobilfunkverbindung oder ein Internetprotokoll realisiert sein. Die Kamera 5 ist ausgebildet, um die vom Innenraum 1 aufgenommenen Bilder oder Filme an den Computer 6 und/oder an den externen Computer 7 zu übermitteln.

Der Computer 6 und/oder der externe Computer 7 sind ausgebildet, um die Bild- und/oder Videodaten der Kamera 5 über eine Schnittstelle 33, 34 zu empfangen. Der Computer 6 und/oder der externe Computer 7 sind ausgebildet, um über die Schnittstelle 33, 34 Daten auszusenden. Zudem kann die Schnittstelle 33, 34 eine Datenschnittstelle aufweisen, um Daten, insbesondere ein Bild oder ein Signal, an einen Empfänger 32, wie beispielsweise ein Mobilfunkgerät, zu übertragen, oder ein Signal, wie beispielsweise eine Meldung zu übertragen. Der Empfänger 32 und/oder der Computer 6 und/oder der externe Computer 7 verfügen über optische und/oder akustische Ausgabemittel, wie beispielsweise einen Lautsprecher und/oder einen Bildschirm.

FIG 2 zeigt in einer schematischen Darstellung ein von der Kamera 5 aufgenommenes Bild des Innenraumes 1 des Fahrzeuges 2. In dem dargestellten Beispiel befindet sich der Innenraum 1 in einem vorgegebenen Zustand, in dem sich kein Gegenstand im Innenraum 1 befindet, der nicht zur Innenausstattung des Innenraumes 1 gehört. Das heißt, es sind keine Personen oder Tiere oder weitere Gegenstände, wie zum Beispiel Taschen oder Jacken, im Innenraum vorhanden. Somit zeigt das Bild 8 einen leeren Innenraum des Fahrzeuges 2, auf dem kein vorgegebener Gegenstand zu sehen ist. Auf dem Bild 8 sind mehrere Sitze 3, 4 und Seitenfenster 9 dargestellt, die in Seitenwänden 10, 11 des Innenraumes 1 angeordnet sind.

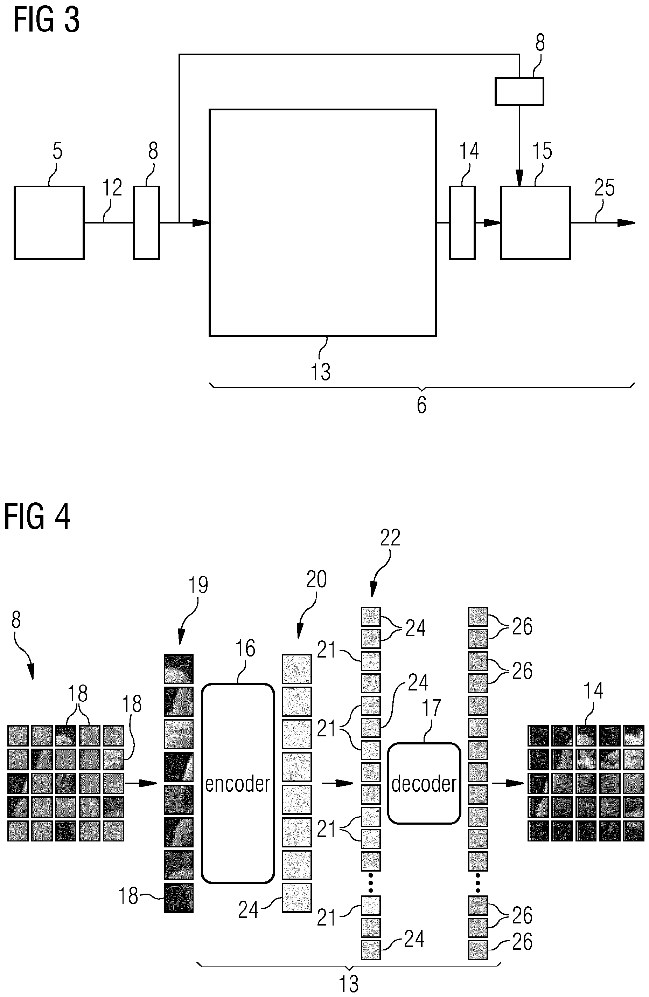

FIG 3 zeigt in einer schematischen Darstellung eine Vorrichtung zum Erkennen eines vorgegebenen Objektes in dem Innenraum 1 des Fahrzeuges. Die Kamera 5 übermittelt über eine Datenschnittstelle 12 ein Bild 8 des Innenraumes 1 des Fahrzeuges an den Computer 6. Der Computer 6 weist einen trainierten Autoencoder 13 auf. Der Autoencoder 13 ermittelt anhand des zugeführten Bildes nach einem vorgegebenen, insbesondere erlernten Verfahren ein dekodiertes Bild 14. Das dekodierte Bild 14 wird einer Vergleichseinheit 15 zugeführt. Die Vergleichseinheit 15 vergleicht das dekodierte Bild 14 mit dem Bild 8 der Kamera anhand eines vorgegebenen Vergleichs. Bei dem Vergleich können beispielsweise die Helligkeiten und/oder die Farbwerte des dekodierten Bildes und des Bildes des Innenraumes verglichen werden. Der Vergleich pixelweise erfolgen oder für vorgegebene Pixelbereich erfolgen. Es wird beispielsweise ein vorgegebener Gegenstand erkannt, wenn die verglichenen Helligkeiten und/oder die verglichenen Farbwerte eine entsprechend vorgegebene Schwelle oder Schwellen überschreiten. Unterscheiden sich beispielsweise die verglichenen Helligkeiten und/oder die verglichenen Farbwerte um mehr als 3% oder mehr als 5% für beispielsweise einen Pixelbereich von 5x5 Bildpixel, dann wird das Vorhandensein eines vorgegebenen Gegenstandes erkannt.

Abhängig von einem Ergebnis des Vergleichs erkennt die Vergleichseinheit 15, dass in dem Bild des Innenraumes ein vorgegebener Gegenstand wie z.B. eine Person, ein Tier, eine Tasche, eine Jacke oder ein Fahrrad usw. enthalten ist. Das Erkennen des vorgegebenen Gegenstandes wird durch das entsprechende Training des Autoencoders erlernt.

Wird ein vorgegebener Gegenstand im Bild 8 erkannt, so wird von der Vergleichseinheit 15 ein Ausgabesignal 25 z.B. erzeugt. Das Ausgabesignal 25 kann eine Information über den erkannten Gegenstand und/oder das Bild 8 aufweisen oder nur ein Hinweissignal sein, dass ein vorgegebener Gegenstand erkannt wurde. Das Ausgabesignal 25 kann an den Computer 6 übermittelt werden. Die die Vergleichseinheit 15 kann in Form eines Softwareprogrammes realisiert sein, das vom Computer 6 abgearbeitet wird. Somit kann der Computer 6 das Ausgabesignal 25 akustisch über Lautsprecher und/oder optisch über einen Bildschirm ausgeben und/oder in einem Datenspeicher speichern oder an einen weiteren Computer oder Empfänger übertragen. In analoger Weise kann der trainierte Autoencoder 13 und vorzugsweise zusätzlich die Vergleichseinheit 15 von dem externen Computer 7 realisiert sein.

Zudem können der Computer 6 und/oder der externe Computer 7 ausgebildet sein, um nach dem Erkennen eines vorgegebenen Gegenstandes im gemittelten Bild wenigstens einen Bildbereich des gemittelten Bildes, der den vorgegebenen Gegenstand aufweist, in Bezug auf ein Vorhandensein von vorgegebenen Merkmalen zu analysieren. Der Computer 6 und/oder der externe Computer 7 können zudem ausgebildet sein, um die mithilfe der Analyse gefundenen vorgegebenen Merkmale des Bildbereiches in einem mehrdimensionalen Merkmalsraum zu speichern, und das gemittelte Bild in einem vorgegebenen Cluster von gemittelten Bildern mit ähnlichen oder gleichen Gegenständen zuzuordnen. Der Computer 6 und/oder der externe Computer 7 können zudem ausgebildet sein, um eine Mitteilung über das gemittelte Bild und/oder über den zugeordneten Cluster des gemittelten Bildes auszugeben und/oder zu speichern.

Der Computer 6 und/oder der externe Computer 7 können zudem ausgebildet sein, um einen neuen Cluster automatisch zu bilden, wenn das gemittelte Bild einem vorgegebenen Cluster von gemittelten Bildern mit ähnlichen oder gleichen Gegenständen nicht zugeordnet werden kann. Dabei wird dem neuen Cluster eine Kennung zugeordnet, wobei eine Mitteilung über den neuen Cluster mit der Kennung ausgegeben und/oder gespeichert werden kann.

FIG 4 zeigt in einer schematischen Darstellung eine Ausführungsform für den Autoencoder 13, der einen Encoder 16 und einen Decoder 17 aufweist. Der Autoencoder 13 kann von dem Computer 6 und/oder von dem externen Computer 7 in Form eines Softwareprogrammes realisiert sein. Der Autoencoder 13 kann mit verschiedenen Modellen realisiert sein. In dem beschriebenen Beispiel sind der Encoder 16 und der Decoder 17 als Vision Transformer Modelle ausgebildet. Entsprechende Vision-Transformer-Modelle sind beispielsweise in dem Artikel von Alexey Dosovitskiy et al., An Image is Worth 16x16 Words: Transformers for Image Recognition at Scale, arXiv:2010.11929v2, 3. Juni 2021 beschrieben.

Zum Trainieren des dargestellten maskierten Autoencoders 13 wird ein Bild 8 in eine Vielzahl von Bildteilen 18 unterteilt. In dem dargestellten Ausführungsbeispiel wird das Bild 8 in 25 Bildteile 18 unterteilt, die gleich groß sind. Ein Bildteil kann 10x10 Pixel des Bildes aufweisen. Von den 25 Bildteilen 18 wird nur eine erste Teilmenge 19 der Bildteile 18 dem Encoder 16 zugeführt. In dem dargestellten Ausführungsbeispiel werden als erste Teilmenge 19 acht Bildteile 18 des Bildes 8 dem Encoder 16 zugeführt. Die zugeführten Bildteile 18 enthalten auch eine Information, an welcher Position des Bildes 8 das jeweilige Bildteil 18 angeordnet war. Somit werden 17 Bildteile 18 des Bildes 8 maskiert und nicht an den Encoder 16 übermittelt. Der Encoder 16 ermittelt eine vorgegebene Anzahl von versteckten Bildteilen 24 in einer versteckten Schicht 20 des Modells des Autoencoders 13. In einem folgenden Schritt werden die versteckten Bildteile 24 der versteckten Schicht 20 entsprechend ihrer Position im Bild 8 in der Reihenfolge des Bildes 8 angeordnet. Die entsprechenden 17 nicht vorhandenen versteckten Bildteile werden mit Füllbildteilen 21 aufgefüllt. Die Füllbildteile 21 weisen die gleiche Anzahl an Bildpixeln wie die Bildteile 18 auf und enthalten keine oder eine neutrale Bildinformation. Somit ergibt sich ein ergänztes verstecktes Bild in der ergänzten versteckten Schicht 22, die genauso viele Bildteile 18, wie das Bild 8 aufweist. Zudem ist auch die Reihenfolge der versteckten Bildteile 24 gemäß der ursprünglichen Reihenfolge der Bildteile 18 des Bildes 8 hergestellt. Die Bildteile 21, 24 der ergänzten versteckten Schicht 22 werden dem Decoder 17 zugeführt. Der Decoder 17 ermittelt anhand der versteckten Bildteile 24 und der Füllbildteile 21 der ergänzten versteckten Schicht 22 decodierte Bildteile 26 für ein dekodiertes Bild 14. Durch einen Vergleich des dekodierten Bildes 14 mit dem Bild 8 werden der Encoder 16 und der Decoder 17 in der Weise trainiert, dass das dekodierte Bild 14 möglichst gut dem Bild 8 entspricht. Ein entsprechendes Verfahren zum Trainieren eines maskierten Autoencoders ist beispielsweise aus dem Artikel von Kaiming He et al., Masked Autoencoders Are Scalable Vision Learners, Facebook AI Research, arXiv:2111.06377v3, 19. Dezember 2021 bekannt.

Beispielsweise können beim Training des Encoders und Decoders nur 20 % der Bildteile eines Bildes an den Encoder weitergeleitet werden. Die übrigen 80 % der Bildteile des Bildes werden maskiert, das heißt nicht vom Encoder verarbeitet. In analoger Weise werden dann vor der Verarbeitung der vom Encoder ermittelten Bildteile die fehlenden, das heißt die markierten Bildteile, in Form von Füllbildteilen aufgefüllt, wie beschrieben. Mithilfe des Trainingsverfahrens lernen der Encoder 16 und der Decoder 17, die Pixel der Bildteile des dekodierten Bildes 14 im Wesentlichen gemäß dem Bild 8 zu ermitteln. Beispielsweise kann der Encoder 16 ein Vision Transformer Encoder mit 24 Encoder-Blöcken sein. Zudem kann der Decoder 17 ein Vision Transformer mit beispielsweise nur acht Encoder-Blöcken sein. Durch die technisch einfachere Ausbildung des Decoders wird ein schnelleres Training ermöglicht.

Das Trainingsverfahren wird so lange durchgeführt, bis der Decoder 17 ein dekodiertes Bild 23 erzeugt, das eine vorgegebene Qualität relativ zum Eingangsbild 8 aufweist. Beim Training werden vorzugsweise Bilder von Innenräumen des Fahrzeuges verwendet, die von der Kamera aufgenommen wurden. Dabei können sowohl Bilder verwendet werden, bei denen sich vorgegebene Gegenstände im Innenraum des Fahrzeuges befinden oder bei denen der Innenraum des Fahrzeuges keine vorgegebenen Gegenstände aufweist. Bei dem Trainingsverfahren werden bei den verschiedenen Bildern immer wieder unterschiedliche Bildteile maskiert. Die Maskierung kann die maskierten Bildteile, die vom Encoder 16 nicht weiterverarbeitet werden, zufällig oder gezielt wählen.

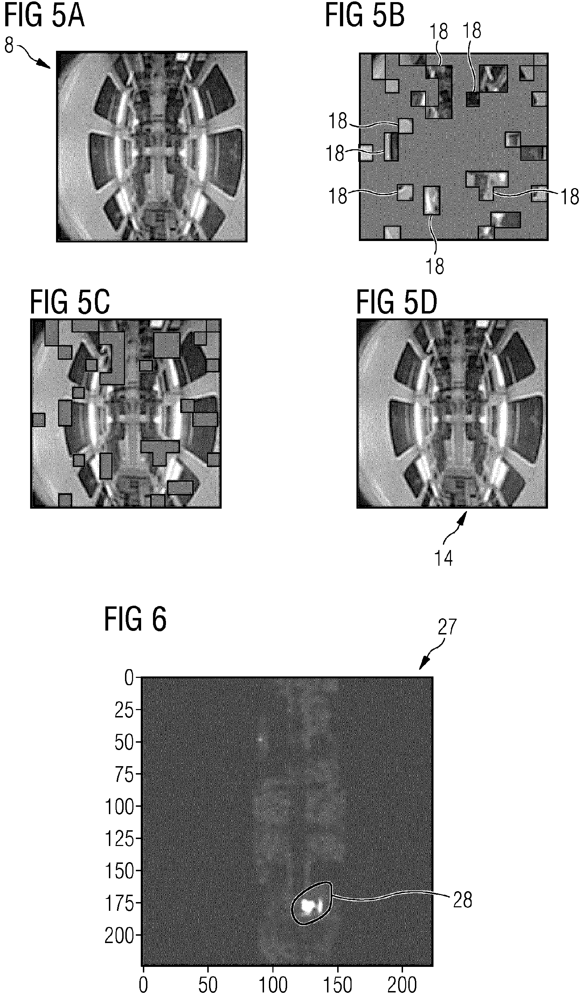

FIG 5 zeigt in 5A in einer schematischen Darstellung das Bild 8, das von einem Innenraum mit der Kamera des Fahrzeuges aufgenommen wurde. FIG 5B zeigt das maskierte Bild, wobei die maskierten Bildteile des Bildes 8 grau dargestellt sind und nur die nicht maskierten Bildteile 18, die dem Encoder 16 zugeführt werden noch Bildinformationen des Bildes 8 der FIG 5A darstellen. Die nicht maskierten Bildteile 18 werden dem Encoder und dem Decoder zum Training und auch zum Erkennen eines Gegenstandes im Bild 8 zugeführt. FIG 5C zeigt in einer schematischen Darstellung die vom Decoder 17 für die maskierten Bildteile des Bildes 8 ermittelten dekodierten Bildteile 26, wobei in dieser speziellen Darstellung die Bildteile 18, die dem Encoder 16 zugeführt wurden, d.h. die nicht maskierten Bildteile des Bildes 8 als graue Bildteile dargestellt sind. In dieser Darstellung kann die Leistung des Autoencoder 13 gut dargestellt werden. FIG 5D zeigt schematisch das vom Decoder 17 ermittelte dekodierte Bild 14.

FIG 6 zeigt in einer schematischen Darstellung ein Vergleichsbild 27 zwischen dem Bild 8 der FIG 5A, das von der Kamera aufgenommen wurde und dem dekodierten Bild 14 der FIG 5D, das von der Vergleichseinheit 15 gemäß den FIG 3 und 4 ermittelt wird. In dem Vergleichsbild 27 sind die Differenzen der Helligkeiten des Bildes 8 und des dekodierten Bildes 14 dargestellt. Dabei sind in einem Bildbereich 28 Differenzhelligkeiten dargestellt, bei denen die Differenz der Helligkeiten des Bildes 8 und des dekodierten Bildes 14 eine vorgegebene Schwelle überschreiten. Die Differenz der Helligkeiten kann beispielsweise mit einer L2 Loss Funktion berechnet werden. Anstelle der Helligkeiten können auch die Farbunterschiede des Bildes 8 und des dekodierten Bildes 14 beispielsweise pixelweise mit einer vorgegebenen Schwelle verglichen werden. Die Differenz der Farbunterschiede kann beispielsweise mit einer L2 Loss Funktion berechnet werden.

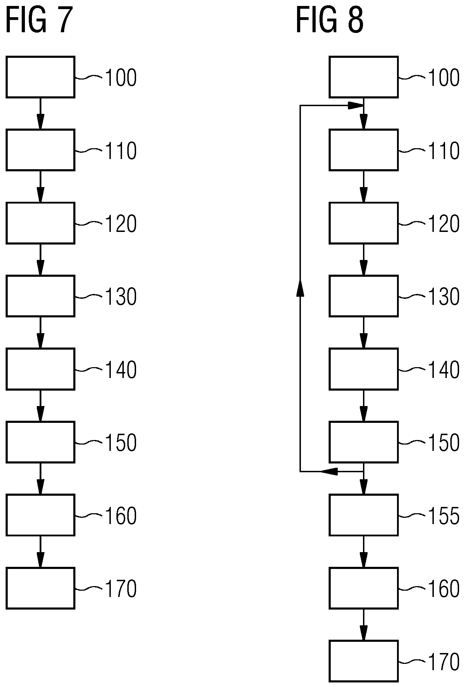

Der trainierte Autoencoder 13, das heißt der trainierte Encoder 16 und der trainierte Decoder 17 werden gemäß der Anordnung der FIG 3 und 4 eingesetzt, um in Bildern von Innenräumen von Fahrzeugen wenigstens einen vorgegebenen Gegenstand zu erkennen. Dabei wird ein Verfahrensablauf verwendet, wie schematisch in FIG 7 dargestellt.

Bei Programmpunkt 100 erfasst die Kamera 5 ein Bild des Innenraumes 1 des Fahrzeuges 2, wie beispielsweise in FIG 5A dargestellt ist. Das Bild 8 wird in eine Vielzahl von Bildteilen 18, beispielsweise 100 Bildteile 18, bei einem Programmschritt 110 unterteilt.

Bei einem folgenden Programmschritt 120 wird nur eine erste Teilmenge 19 der Bildteile 18, beispielsweise nur 20 % der Bildteile 18, zusätzlich mit einer Ortsinformation des Bildteiles innerhalb des Bildes, d.h. an welcher Position des das Bildteil angeordnet ist, an den Encoder 16 übermittelt, wie schematisch in FIG 4 für das Training erläutert. Die Teilmenge der Bildteile, die dem Encoder bei Programmpunkt 120 zugeführt wird, kann zwischen 10 % und 30 % der Anteile der Bildteile liegen.

Der trainierte Encoder 16 ermittelt in einem Programmschritt 130 aus den zugeführten Bildteilen 18 versteckte Bildteile 24 in der versteckten Schicht 20. In einem Programmschritt 140 werden die versteckten Bildteile 24 in der ergänzten versteckten Schicht 22 in der entsprechenden Reihenfolge gemäß dem Bild 8 angeordnet, wobei an den Positionen, an denen die nicht übermittelten maskierten Bildteile angeordnet waren, Füllbildteile 21 ergänzt werden. Die Füllbildteile 21 enthalten keine oder eine neutrale Bildinformation. Die Bildteile 21, 24 der ergänzten versteckten Schicht 22 entsprechen in Bezug auf die maskierten Bildteile und die nicht maskierten Bildteile der Reihenfolge der Bildteile des Bildes 8. Die versteckten Bildteile 24 und die Füllbildteile 21 der ergänzten versteckten Schicht 22 werden dem Decoder 17 zugeführt. Der Decoder 17 ermittelt anhand der zugeführten Bildteile 21, 24 ein dekodiertes Bild 14 bei Programmschritt 150. Bei einem folgenden Programmschritt 160 vergleicht die Vergleichseinheit 15 das dekodierte Bild 14 mit dem Bild 8 der Kamera 5. Der Vergleich kann beispielsweise darin bestehen, dass die Helligkeiten des dekodierten Bildes 14 und des Bildes 8 des Innenraumes und/oder die Farbwerte des dekodierten Bildes 14 und des Bildes 8 des Innenraumes miteinander verglichen werden. Beispielsweise kann ein pixelweiser Vergleich durchgeführt werden. Abhängig von der gewählten Ausführungsform können auch mehrere Pixel in Bezug auf die Helligkeit und/oder die Farbwerte gemittelt werden. Beispielsweise kann für den Vergleich eine L2 Loss-Funktion verwendet werden. Ergibt der Vergleich der Helligkeiten und/oder der Farbwerte, dass der Unterschied zwischen den Helligkeiten und/oder den Farbwerten über entsprechenden vorgegebenen Schwellen liegt, so wird das Vorliegen eines vorgegebenen Gegenstandes im Bild erkannt. Wird ein vorgegebener Gegenstand erkannt, dann gibt die Vergleichseinheit 15 bei Programmpunkt 170 eine Mitteilung in Form eines Ausgabesignals aus und/oder speichert die Mitteilung in einem Datenspeicher ab.

In einer weiteren Ausführungsform des Verfahrens, das in FIG 7 schematisch dargestellt ist, werden die Programmschritte 110 bis 150 des Verfahrens der FIG 6 wenigstens ein weiteres Mal für eine weitere Teilmenge der Bildteile des Bildes des Innenraumes durchgeführt. Somit werden für ein Bild 8 wenigstens zwei dekodierte Bilder 14 ermittelt. Bei dem zweiten Durchlauf der Programmpunkte 110 bis 150 des Programmablaufes der FIG 6 wird die Teilmenge 19 der Bildteile 18, die dem Encoder 16 zugeführt werden, in der Weise ausgewählt, das sich die Teilmenge 19 des zweiten Durchlaufes wenigstens in einzelnen, insbesondere mehreren Bildteilen von der Teilmenge des vorhergehenden Verfahrens unterscheidet. Vorzugsweise werden bei den zwei aufeinanderfolgenden Verfahren zwei verschiedene Teilmengen der Bildteile des Bildes dem Encoder zugeführt. Nach dem zweimaligen Durchlaufen der Programmpunkte 110 bis 150 sind somit zwei dekodierte Bilder 14 ermittelt worden. Die zwei dekodierten Bilder werden bei einem Programmpunkt 155 mithilfe eines Mittelungsverfahrens gemittelt. Auf diese Weise wird ein gemitteltes dekodiertes Bild erstellt.

Die Mittelung der zwei dekodierten Bilder kann beispielsweise in einer Mittelung der Helligkeiten der dekodierten Bilder und/oder in einer Mittelung der Farbwerte der dekodierten Bilder bestehen. Es können jedoch auch andere Verfahren für eine Mittelung oder eine Kombination der Helligkeiten und/oder der Farbwerte der dekodierten Bilder verwendet werden, um ein gemitteltes dekodiertes Bild bei Programmpunkt 155 zu erzeugen. Nach Programmpunkt 155 wird das gemittelte dekodierte Bild mit dem Bild 8 der Kamera verglichen. Der Vergleich kann analog zu dem Programmpunkt 160 des Verfahrens der FIG 6 ausgeführt werden. Abhängig von der gewählten Ausführungsform können mithilfe des beschriebenen Verfahrens der Programmpunkte 110 bis 150 mehrere dekodierte Bilder ermittelt werden. Diese mehreren dekodierten Bilder können bei Programmpunkt 155 mithilfe des Mittelungsverfahrens in ein einziges gemitteltes dekodiertes Bild umgewandelt werden. Das gemittelte dekodierte Bild wird anschließend bei Programmpunkt 160 für den Vergleich mit dem Bild 8 der Kamera verwendet, um das Vorhandensein eines Gegenstandes im Bild zu identifizieren und bei Programmpunkt 170 auszugeben.

In einer bevorzugten Ausführungsform wird bei Programmpunkt 110 eine Teilmenge der Bildteile des Bildes 8 ausgewählt, die ein ganzzahliges Vielfaches der gesamten Anzahl der Bildteile darstellt. Anschließend wird das Verfahren der Programmpunkte 110 bis 150 so oft durchlaufen, bis alle Bildteile des Bildes 8 mit dem Encoder und Decoder verarbeitet wurden, wobei die ausgewählten Bildteile, die dem Encoder zugeführt wurden, keine doppelten Bildteile aufweisen, sodass jedes Bildteil nur einmal von dem Encoder verarbeitet wird und alle Bildteile des Bildes von dem Encoder bearbeitet wurden. Die auf diese Weise ermittelten dekodierten Bilder werden bei Programmpunkt 155 gemittelt und das gemittelte dekodierte Bild wird anschließend bei Programmpunkt 160 mit dem Bild der Kamera verglichen und bei Programmpunkt 170 bei Erkennen eines vorgegebenen Gegenstandes im Bild eine Mitteilung ausgegeben und/oder gespeichert wird. Mithilfe dieses Verfahrens wird eine präzise Detektion von Gegenständen im Bild, die nicht zu einem Innenraum des Fahrzeuges gehören, erkannt.

In einer weiteren Ausführungsform wird der Autoencoder dahingehend trainiert, erhöhte Sonneneinstrahlungen auszufiltern. Dazu werden für das Training aufgenommene Bilder der Innenräume von Fahrzeugen verwendet, bei denen nachträglich künstlich hellere Flächen in den Bildern erzeugt wurden. Beispielsweise werden Polygonflächen mit wenigstens drei Ecken verwendet, um zufällig Bereiche in den aufgenommenen Bildern mit einer erhöhten Helligkeit zu versehen. Mit diesem Training kann die Einstrahlung von Sonnenlicht vom Autoencoder besser erkannt werden, so dass die Wahrscheinlichkeit, dass aufgrund von Sonneneinstrahlung im Bild fälschlicherweise ein vorgegebener Gegenstand erkannt wird.

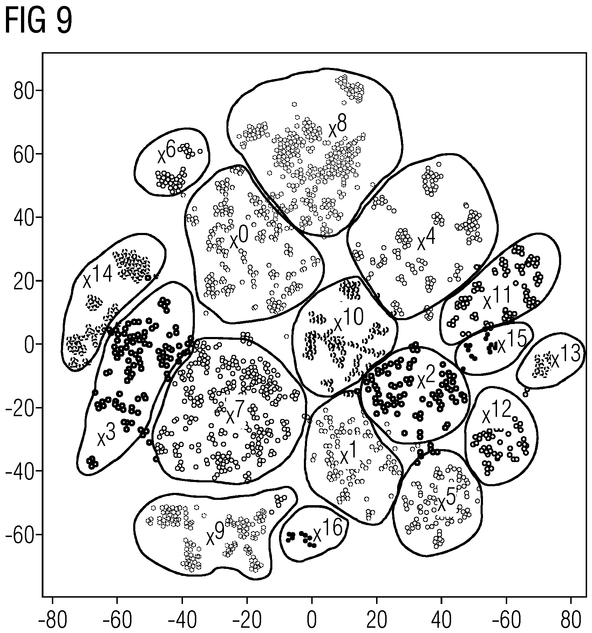

In einer weiteren Ausführungsform wird ein Bild 8 eines Innenraumes, das mithilfe des vorgeschlagenen Verfahrens als ein Bild identifiziert wurde, das einen vorgegebenen Gegenstand aufweist, von dem Computer mit einer Merkmals-Clusterung analysiert. Für diesen Zweck werden Cosinus-Ähnlichkeiten verwendet, um ähnliche Merkmale zu clustern. Das analysierte Bild wird in einem Clusterdiagramm, wie schematisch in FIG 9 gezeigt, dargestellt. Die Analyse des Bildes kann eine t-verteilten stochastischen Nachbareinbettung (t-SNE) aufweisen, wie in dem Artikel Laurens van der Maaten et al., Visualizing Data using t-SNE, Journal of Machine Learning Research 9.11,2008 beschrieben.

Mithilfe dieses Verfahrens werden, wie in FIG 9 dargestellt, Cluster von Bildern mit vorgegebenen Gegenständen visualisiert. Dabei wird mithilfe eines trainierten Gaußschen Mischmodells eine Clusterung in dem t-SNE-Merkmalsraum durchgeführt. Dazu wird das Bild, mithilfe eines DinoV2-Modells, das mit Bildern der Datenbank Image Net vortrainiert wurde, analysiert. In dem Artikel von Tsung-Yi Lin et al., Microsoft COCO: Common Objects in Context, 2014, URL: http://arxiv.org/pdf/1405.0312v3 ist ein entsprechendes Analyseverfahren beschrieben.

FIG 9 zeigt in einer schematischen Darstellung in einem zweidimensionalen Diagramm eine Vielzahl von Clustern, wobei beispielsweise die Cluster, die mit der Zahl 1, 2, 5, 7, 10 und 12 gekennzeichnet sind, Bilder repräsentieren, die eine Person im Bild aufweisen. Cluster, die mit den Zahlen 13 und 8 gekennzeichnet sind, stellen Bilder mit einer Jacke dar. Dagegen sind Cluster mit den Zahlen 0, 9, 16, 3 und 14 falsch-positive Bilder unter verschiedenen Belichtungssituationen. Diese Cluster werden mit der Metainformation Ignorieren gespeichert.

Wird ein weiteres Bild analysiert, das nahe an den Clustern mit den Zahlen 1, 2, 5, 7, 10 und 12 liegt, so wird von dem Computer ein Bild mit einer Person erkannt. Zudem wird von dem Computer bei einem Bild, das den Clustern 8 oder 13 zugeordnet wird, ein Bild mit einer Jacke erkannt. Der Computer kann entsprechende Informationen speichern oder ausgeben.

Abhängig von der gewählten Ausführungsform kann es erforderlich sein, dass die in FIG 9 dargestellten Cluster durch eine Bedienperson einem vorgegebenen Gegenstand zugeordnet werden. Nach dem Labeln der Cluster können weitere analysierte Bilder entsprechend in FIG 9 dargestellt werden und somit von einer Bedienperson des Fahrzeuges als Bild mit einem bestimmten Gegenstand erkannt werden. Beispielsweise wird das analysierte Bild 8 nach Erkennen eines vorgegebenen Gegenstandes auf einem Bildschirm einer Bedienperson angezeigt.

Während des Betriebes können neue Cluster vom Computer erlernt werden, die einen vorgegebenen Abstand von bereits bekannten Clustern im Merkmalsraum haben. Bei Erkennen eines neuen Clusters wird das neue Cluster ohne Zahl in einem Clusterdiagramm gemäß FIG 9 dargestellt und eine Ausgabe an eine Bedienperson ausgegeben, dass ein neues Cluster erkannt wurde. Das neue Cluster wird von einer Bedienperson mit einer neuen Zahl gelabelt, die beispielsweise ein Bild mit einem Fahrrad darstellt. Somit kann automatisch während des Betriebes ein selbstlernendes Verfahren zum Erkennen von neuen Clustern realisiert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Wie hierin verwendet, entspricht ein Computer z.B. einem Prozessor oder einem beliebigen elektronischen Gerät, das über Hardwareschaltungen, Software und/oder Firmware zur Verarbeitung von Daten konfiguriert ist. Beispielsweise können die hier beschriebenen Prozessoren einem oder mehreren (oder einer Kombination) eines Mikroprozessors, einer CPU oder einer anderen integrierten Schaltung (IC) oder einer anderen Art von Schaltung entsprechen, die in der Lage ist, Daten in einem Datenverarbeitungssystem zu verarbeiten. Der Speicher des Computers kann einem internen oder externen flüchtigen Speicher (z.B. Hauptspeicher, CPU-Cache und/oder RAM) entsprechen, der in dem Computer enthalten ist und/oder in operativer Verbindung mit dem Computer steht. Ein solcher Speicher kann auch einem nichtflüchtigen Speicher entsprechen (z.B. Flash-Speicher, SSD, Festplatte oder ein anderes Speichergerät oder nichttransitorisches computerlesbares Medium), der in operativer Verbindung mit dem Computer steht.

Der beschriebene Computer kann mindestens ein Eingabegerät und mindestens ein Anzeige- oder Ausgabegerät in operativer Verbindung mit dem Computer umfassen. Die Eingabevorrichtung kann beispielsweise eine Maus, eine Tastatur, einen Touchscreen, eine Gesteneingabevorrichtung oder eine andere Art von Eingabevorrichtung umfassen, die in der Lage ist, Benutzereingaben für den Computer bereitzustellen. Die Anzeigevorrichtung kann beispielsweise einen LCD- oder AMOLED-Bildschirm, einen Monitor, ein am Kopf getragenes Display oder jede andere Art von Anzeigevorrichtung oder Ausgabevorrichtung umfassen, die in der Lage ist, Ausgaben des Computers anzuzeigen. Beispielsweise können der Computer, der Speicher, die Softwareanweisungen, die Eingabevorrichtung und die Anzeigevorrichtung als Teil eines Datenverarbeitungssystems enthalten sein, das einem PC, einer Workstation, einem Server, einem Notebook, einem Tablet, einem Mobiltelefon, einer kopfgetragenen Anzeige oder einer anderen Art von Computersystem oder einer beliebigen Kombination davon entspricht. Der Computer kann auch einen oder mehrere Datenspeicher enthalten. Der Computer kann so konfiguriert sein, dass er Daten und/oder andere hierin beschriebene Informationen aus/in dem Datenspeicher verwaltet, abruft, erzeugt, verwendet, überarbeitet und speichert. Beispiele für einen Datenspeicher können eine Datei und/oder einen Datensatz umfassen, der in einer Datenbank (z. B. Oracle, Microsoft SQL Server), einem Dateisystem, einer Festplatte, einer SSD, einem Flash-Laufwerk, einer Speicherkarte und/oder einer anderen Art von Gerät oder System gespeichert ist, das nichtflüchtige Daten speichert. Es ist anzumerken, dass die Offenbarung zwar eine Beschreibung im Zusammenhang mit einem voll funktionsfähigen Computer und/oder einer Reihe von Handlungen enthält, dass aber Fachleute verstehen werden, dass zumindest Teile des Mechanismus der vorliegenden Offenbarung und/oder der beschriebenen Handlungen in Form von ausführbaren Computer-/Prozessoranweisungen (z. B, die beschriebenen Software-Befehle und/oder die entsprechenden Firmware-Befehle), die in einem nicht-transitorischen maschinenverwendbaren, computerverwendbaren oder computerlesbaren Medium in einer beliebigen Form enthalten sind, verteilt werden können, und dass die vorliegende Offenbarung gleichermaßen gilt, unabhängig von der besonderen Art des Befehls- oder Datenträgermediums oder Speichermediums, das zur tatsächlichen Durchführung der Verteilung verwendet wird. Beispiele für nicht-transitorische maschinenlesbare oder computerlesbare Medien sind: ROMs, EPROMs, Magnetbänder, Festplattenlaufwerke, SSDs, Flash-Speicher, CDs, DVDs und Blu-ray-Disks. Die vom Computer/Prozessor ausführbaren Anweisungen können eine Routine, eine Unterroutine, Programme, Anwendungen, Module, Bibliotheken und/oder Ähnliches umfassen. Ferner ist zu beachten, dass die ausführbaren Computer-/Prozessoranweisungen Quellcode, Bytecode, Laufzeitcode, Maschinencode, Assemblersprache, Java, JavaScript, Python, C, C#, C++ oder einer anderen Form von Code entsprechen und/oder daraus erzeugt werden können, der so programmiert/konfiguriert werden kann, dass er mindestens einen Prozessor veranlasst, die hierin beschriebenen Handlungen und Merkmale auszuführen. Der Klassifikator oder die neuronalen Netze oder neuronalen Netzwerke können in einem Rahmenwerk für maschinelles Lernen implementiert und eingesetzt werden, z. B. TensorFlow-Framework, Microsoft Cognitive Toolkit-Framework Rahmenwerk, Apache Singa Rahmenwerk oder Apache MXNet Rahmenwerk.

## Patentansprüche

1. Computerimplementiertes Verfahren zum Erkennen eines vorgegebenen Gegenstandes in einem Innenraum eines Fahrzeuges, insbesondere eines Schienenfahrzeuges, wobei ein Bild des Innenraumes mit einem trainierten Autoencoder analysiert wird, wobei der Autoencoder einen Encoder und einen Decoder aufweist, wobei das Bild des Innenraumes in Bildteile eingeteilt ist, wobei eine erste Teilmenge der Bildteile des Bildes von dem Encoder verarbeitet wird und eine versteckte Repräsentation des Bildes ermittelt wird, wobei die versteckte Repräsentation für jedes Bildteil der ersten Teilmenge ein verstecktes Bildteil aufweist, wobei anschließend zu den versteckten Bildteilen an den Positionen der maskierten und nicht analysierten Bildteile Füllbildteile eingefügt werden, wobei der Decoder anhand der versteckten Bildteile und der Füllbildteile ein dekodiertes Bild ermittelt, wobei das dekodierte Bild mit dem Bild des Innenraumes verglichen wird und abhängig von einem Ergebnis des Vergleichs der vorgegebene Gegenstand erkannt wird oder nicht, und wobei nach Erkennen des vorgegebenen Gegenstandes eine Mitteilung ausgegeben und/oder eine Mitteilung gespeichert wird.

2. Verfahren nach Anspruch 1, wobei das Verfahren wenigstens ein weiteres Mal für eine weitere Teilmenge der Bildteile des Bildes des Innenraumes durchgeführt wird und ein weiteres dekodiertes Bild ermittelt wird, wobei die erste Teilmenge und die weitere Teilmenge der Bildteile wenigstens teilweise verschiedene Bildteile des Bildes aufweisen, wobei aus dem dekodierten Bild und dem weiteren dekodierten Bild ein gemitteltes Bild ermittelt wird, wobei das gemittelte Bild mit dem Bild des Innenraumes verglichen wird und abhängig von einem Ergebnis des Vergleichs der vorgegebene Gegenstand erkannt wird oder nicht, und wobei nach Erkennen des vorgegebenen Gegenstandes eine Mitteilung ausgegeben und/oder eine Mitteilung gespeichert wird.

3. Verfahren nach einem der vorhergehenden Ansprüche, wobei das Verfahren wenigstens dreimal durchgeführt wird und wenigstens drei dekodierte Bilder ermittelt werden, wobei aus den drei dekodierten Bildern das gemittelte Bild ermittelt wird, wobei insbesondere das Verfahren so oft durchgeführt wird, bis mehr als 90 %, insbesondere alle Bildteile des Bildes des Innenraumes verarbeitet wurden.

4. Verfahren nach einem der vorhergehenden Ansprüche, wobei die erste und/oder die weitere Teilmenge der Bildteile zwischen 10 % und 40 % der Bildteile des Bildes des Innenraumes aufweisen, und wobei insbesondere die erste und die wenigstens eine weitere Teilmenge nur verschiedene Bildteile des Bildes umfassen, und wobei insbesondere die erste und die wenigstens eine weitere Teilmenge der Bildteile die gleiche Anzahl der Bildteile aufweisen.

5. Verfahren nach einem der Ansprüche 2 bis 4, wobei das gemittelte Bild durch eine Mittelung der Helligkeiten der dekodierten Bilder und/oder durch eine Mittelung der Farbwerte der dekodierten Bilder ermittelt wird, wobei insbesondere durch eine pixelweise Mittelung der Helligkeiten der dekodierten Bilder und/oder der Farbwerte der dekodierten Bilder das gemittelte Bild ermittelt wird.

6. Verfahren nach einem der vorhergehenden Ansprüche, wobei bei dem Vergleich des dekodierten Bildes mit dem Bild des Innenraumes die Helligkeiten und/oder die Farbwerte des dekodierten Bildes und des Bildes des Innenraumes verglichen werden, wobei insbesondere ein pixelweiser Vergleich erfolgt, und wobei ein vorgegebener Gegenstand erkannt wird, wenn die verglichenen Helligkeiten und/oder die verglichenen Farbwerte eine vorgegebene Schwelle für insbesondere einen vorgegebenen Pixelbereich überschreiten.

7. Verfahren nach einem der vorhergehenden Ansprüche, wobei nach Erkennen eines vorgegebenen Gegenstandes im gemittelten Bild wenigstens ein Bildbereich des gemittelten Bildes, der den vorgegebenen Gegenstand aufweist, in Bezug auf ein Vorhandensein von vorgegebenen Merkmalen analysiert wird, wobei die mithilfe der Analyse gefundenen vorgegebenen Merkmale des Bildbereiches in einem mehrdimensionalen Merkmalsraum gespeichert werden, wobei das gemittelte Bild einem vorgegebenen Cluster von gemittelten Bildern mit ähnlichen oder gleichen Gegenständen zugeordnet wird, und wobei eine Mitteilung über das gemittelte Bild und/oder über den zugeordneten Cluster des gemittelten Bildes ausgegeben und/oder gespeichert wird.

8. Verfahren nach einem der vorhergehenden Ansprüche, wobei nach Erkennen eines vorgegebenen Gegenstandes im gemittelten Bild wenigstens ein Bildbereich des gemittelten Bildes, der den vorgegebenen Gegenstand aufweist, in Bezug auf ein Vorhandensein von vorgegebenen Merkmalen analysiert wird, wobei die mit der Analyse gefundenen vorgegebenen Merkmale des Bildbereiches in einem mehrdimensionalen Merkmalsraum der vorgegebenen Merkmale gespeichert werden, wobei ein neuer Cluster gebildet wird, wenn das gemittelte Bild einem vorgegebenen Cluster von gemittelten Bildern mit ähnlichen oder gleichen Gegenständen nicht zugeordnet werden kann, wobei dem neuen Cluster eine Kennung zugeordnet wird, und wobei eine Mitteilung über den neuen Cluster mit der Kennung ausgegeben und/oder gespeichert wird.

9. Verfahren nach einem der vorhergehenden Ansprüche, wobei der Autoencoder mit einem selbstlernenden Verfahren mit Bildern von Innenräumen von Fahrzeugen trainiert wurde, wobei die Bilder Innenräume mit und ohne vorgegebene Gegenstände zeigen.

10. Verfahren nach einem der vorhergehenden Ansprüche, wobei der Autoencoder mit einem selbstlernenden Verfahren mit Bildern von Innenräumen von Fahrzeugen trainiert wurde, wobei in wenigstens einem Teil der Bilder vor dem Training des Autoencoders in wenigstens einem vorgegebenen Flächenbereich die Helligkeit um wenigstens 10 % gegenüber dem aufgenommenen Bild erhöht wurde.

11. Verfahren nach Anspruch 10, wobei der vorgegebene Flächenbereich als polygone Fläche mit insbesondere drei Ecken ausgebildet ist.

12. Verfahren nach einem der vorhergehenden Ansprüche, wobei der Encoder in Form eines ersten Vision Transformer ausgebildet ist und/oder wobei der Decoder in Form eines zweiten Vision Transformer ausgebildet ist, und wobei insbesondere der zweite Vision Transformer einfacher als der erste Vision Transformer ausgebildet ist.

13. Vorrichtung, die ausgebildet ist, ein Verfahren nach einem der vorhergehenden Ansprüche auszuführen.

14. Computerprogrammprodukt mit Programmcodemitteln, die bei einem Ablauf auf einer Recheneinheit ausgebildet sind, ein Verfahren nach einem der Ansprüche 1 bis 12 auszuführen.
